(19) Europäisches Patentamt
European Patent Office
Office européen des brevets

(11) **EP 4 067 186 A1**

(12) **EUROPÄISCHE PATENTANMELDUNG**

(43) Veröffentlichungstag:
**05.10.2022 Patentblatt 2022/40**

(21) Anmeldenummer: **22165282.9**

(22) Anmeldetag: **30.03.2022**

(51) Internationale Patentklassifikation (IPC):
**B60W 30/085** (2012.01)  **B60W 30/09** (2012.01)
**B60W 30/095** (2012.01)  **B60W 60/00** (2020.01)
**G05D 1/02** (2020.01)

(52) Gemeinsame Patentklassifikation (CPC):
**B60W 30/085; B60W 30/09; B60W 30/0953;
B60W 30/0956; B60W 60/00272; G05D 1/0214;**
B60W 2556/20

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **01.04.2021 DE 102021203353**

(71) Anmelder: **VOLKSWAGEN AG
38440 Wolfsburg (DE)**

(72) Erfinder: **Hruschka, Clemens Markus
38126 Braunschweig (DE)**

(54) **VERFAHREN ZUM BESTIMMEN EINER TRAJEKTORIE EINES ZUMINDEST TEILWEISE ASSISTIERT BETRIEBENEN KRAFTFAHRZEUGS, COMPUTERPROGRAMM SOWIE ASSISTENZSYSTEM**

(57) Die Erfindung betrifft ein Verfahren zum Bestimmen einer Trajektorie (8) eines assistiert betriebenen Kraftfahrzeugs (1), bei welchem zumindest ein Objekt (6) in einer Umgebung (5) des Kraftfahrzeugs (1) erfasst wird und zumindest eine Unsicherheit (7) zum Objekt (6) bestimmt wird, wobei in Abhängigkeit von der erfassten Umgebung (5) und dem erfassten Objekt (6) eine zukünftige Umgebung (5) mit dem Objekt (6) mittels der elektronischen Recheneinrichtung (4) prädiziert wird, wobei ein Risikowert (R) für eine geplante Trajektorie (8a, 8b, 8c) auf Basis einer mittels der elektronischen Recheneinrichtung (4) bestimmten Kollisionswahrscheinlichkeit (9) und einer bestimmten wahrscheinlichsten Trefferkonstellation (10) und einer bestimmten Unfallschwere (11) für die wahrscheinlichste Trefferkonstellation (10) bestimmt wird, wobei im Risikowert (R) die Kollisionswahrscheinlichkeit (9) und die Unfallschwere (10) gewichtet werden, und wobei in Abhängigkeit von dem bestimmten Risikowert (R) die Trajektorie (8) bestimmt wird. Ferner betrifft die Erfindung ein Computerprogrammprodukt sowie ein Assistenzsystem (2).

Fig. 2

EP 4 067 186 A1

**Beschreibung**

Die Erfindung betrifft ein Verfahren zum Bestimmen einer Trajektorie eines zumindest teilweise assistiert betriebenen Kraftfahrzeugs mittels eines Assistenzsystems des Kraftfahrzeugs. Ferner betrifft die Erfindung ein Computerprogrammprodukt sowie ein Assistenzsystem.

Insbesondere bei zumindest teilweise assistiert betriebenen Fahrzeugen oder bei automatisiert betriebenen Fahrzeugen werden entsprechende Verhaltensausplanung, unter anderem Fahrtrajektorien, ermittelt. Hierbei gilt es für die Sicherheit und den Schutz beteiligter Verkehrsteilnehmer Unfälle beziehungsweise Kollisionen zu vermeiden oder, sollte dies nicht möglich sein, zumindest die Unfallschwere zu reduzieren. Daher wird durch zum Beispiel eine integrierte Fahrzeugsensorik und beispielsweise einer Kraftfahrzeug-zu-Infrastruktur-Kommunikation das Umfeld wahrgenommen, im automatisierten Fahren wird dann mittels einer Objektprädiktion das Verhalten anderer Verkehrsteilnehmer beziehungsweise im assistierten Fahren zusätzlich dazu das Fahrverhalten des eigenen Kraftfahrzeugs abgeschätzt und auf Basis dieses Wissens eine eigene Fahrtrajektorie geplant.

Hierbei ist eine wesentliche Herausforderung, dass Wahrnehmung- und Prädiktionsergebnisse aufgrund der sensorischen Erfassung des Fahrzeugumfeldes und der unbekannten Intention anderer Verkehrsteilnehmer unsicherheitsbehaftet sind. Insbesondere besteht die Herausforderung in kritischen Situationen eine fundierte Entscheidung zwischen Manövern zur Kollisionsvermeidung und Kollisionsmitigation zu fällen. Das Kollisionsvermeidungsmanöver birgt das Potential den Unfall gänzlich zu verhindern. Sollte das Vermeidungsmanöver jedoch misslingen, könnte dies zu einer erhöhten Unfallschwere gegenüber einem von vornherein mitigierenden Manöver führen, das somit das Mittel der Wahl wäre. Generell wird von einem Sicherheitssystem mit kombinierter Lenk- und Bremseingriffen ausgegangen. Ferner können auch Einstellungen für Rückhaltesysteme, beispielsweise eine Gurtstraffung vor einem Aufprall, mit bei einer Manöverauswahl berücksichtigt werden.

Unfallkonstellationen, die aufgrund unterschiedlicher Fahrtrajektorien entstehen, können mit einer geeigneten Unfallschweremetrik unterschieden werden. Dabei würde sich ein kollisionsfreies Manöver mit beispielsweise einer Unfallschwere von $S = 0$ einordnen, wodurch letztendlich alle Handlungsalternativen, beispielsweise mögliche Manöver, bewertet, verglichen und die optimale Trajektorie ausgewählt werden kann. Zuvor erwähnte Unsicherheiten erschweren allerdings die Ermittlung dieser Unfallschwere. Daher ist es möglich mithilfe der Wahrscheinlichkeitstheorie den Erwartungswert bezüglich der Unfallschwere zu ermitteln. Dieser wird in der vorliegenden Erfindung auch als "Risiko" bezeichnet, das nach genormter Definition die potenzielle Schadenshöhe mit der Eintrittswahrscheinlichkeit von diesem Schaden gewichtet. Darüber hinaus stellt die obig geschilderte Anwendung Anforderungen an die Unfallschweremetrik und deren Bestimmung. Es müssen sowohl die Trefferlage, die translatorischen und rotatorischen Dynamiken als auch relevante statische Parameter beachtet werden, um ein geeignetes Fahrverhalten auszuwählen.

Die Bestimmung des Risikos von Trajektorien ist im Stand der Technik beispielsweise über sogenannte Monte-Carlo-Simulationen sehr rechenintensiv, da oftmals keine geschlossenen Lösungen für diese Probleme existieren. Dies ist insbesondere der Fall, wenn übliche Verfahren zum Objekt-Tracking wie zum Beispiel das Extended-Kalman-Filter unsicherheitsbehaftete Objektzustände normal beschreiben. Da die Trajektorienplanung in einem dynamischen Umfeld jedoch Echtzeitanforderungen unterliegt, müssen geeignete Berechnungsverfahren gefunden werden, die eine erforderliche Güte in annehmbarer Rechenzeit liefern.

Dabei bildet die Veröffentlichung von J. Hardy und M. Campbell "Contingency Planning over Probabilistic Obstacle Predictions for Autonomous Road Vehicles" in: IEEE Transactions on Robotics (2013) Stand der Technik.

Ferner betrifft die DE 10 2016 218 080 B3 eine Vorrichtung und ein Verfahren zum Bestimmen einer Kollisionswahrscheinlichkeit eines Fahrzeugs mit einem Objekt, umfassend die folgenden Schritte: Erfassen einer Fahrzeugpose und einer Objektpose; Berechnen der Kollisionswahrscheinlichkeit mittels einer Berechnungseinrichtung, wobei folgende Schritte ausgeführt werden: A) Bestimmen einer kombinierten Wahrscheinlichkeitsverteilung aus der Fahrzeugpose und der Objektpose; B) Berechnen einer gemeinsamen Kollisionsfläche aufgrund einer Fahrzeugfläche des Fahrzeugs und einer Objektfläche des Objekts; C) Transformieren der gemeinsamen Kollisionsfläche auf Grundlage der kombinierten Wahrscheinlichkeitsverteilung; D) Bestimmen eines Integrals einer Wahrscheinlichkeitsdichtefunktion über der transformierten Kollisionsfläche zum Berechnen der Kollisionswahrscheinlichkeit, wobei zum Bestimmen des Integrals Werte aus einer mittels eines Speichers bereitgestellten Lookup-Tabelle abgefragt und bereitgestellt werden; und wobei die Wahrscheinlichkeitsdichtefunktion eine Wahrscheinlichkeitsdichtefunktion einer bivarianten Standardnormalverteilung ist, und Ausgeben der berechneten Kollisionswahrscheinlichkeit als Kollisionswahrscheinlichkeitssignal mittels einer Ausgabeeinrichtung.

Aufgabe der vorliegenden Erfindung ist es, ein Verfahren, ein Computerprogrammprodukt sowie ein Assistenzsystem zu schaffen, mittels welchem verbessert eine Trajektorie für ein zumindest teilweise assistiert betriebenes Kraftfahrzeug bestimmt werden kann.

Diese Aufgabe wird durch ein Verfahren, ein Computerprogrammprodukt sowie ein Assistenzsystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen einer Trajektorie eines zumindest teilweise assistiert betriebenen Kraftfahrzeugs mittels eines Assistenzsystems des Kraftfahrzeugs, bei welchem mittels einer Umgebungserfassungseinrichtung des Assistenzsystems zumindest ein Objekt in einer Umgebung des Kraftfahrzeugs erfasst wird und eine Unsicherheit zum Objekt mittels einer elektronischen Recheneinrichtung des Assistenzsystems bestimmt wird, wobei in Abhängigkeit von der erfassten Umgebung und dem erfassten Objekt eine zukünftige Umgebung mit dem Objekt mittels der elektronischen Recheneinrichtung prädiziert wird, wobei ein Risikowert für eine geplante Trajektorie auf Basis einer mittels der elektronischen Recheneinrichtung bestimmten Kollisionswahrscheinlichkeit und einer bestimmten wahrscheinlichsten Trefferkonstellation und einer bestimmten Unfallschwere für die wahrscheinlichste Trefferkonstellation bestimmt wird, wobei im Risikowert die Kollisionswahrscheinlichkeit und die Unfallschwere gewichtet werden, und wobei in Abhängigkeit von dem bestimmten Risikowert die Trajektorie bestimmt wird.

Somit kann verbessert die Trajektorie bestimmt werden. Insbesondere kann somit eine Kollisionsvermeidung oder eine Kollisionsmitigation unter den bestimmten Unsicherheiten abgewägt werden und beispielsweise auf Basis von Lenken und Bremsen ein Ausweichmanöver durchgeführt werden oder eine Trefferlage adressiert werden. Mit anderen Worten, findet eine Trajektorienplanung statt, die insbesondere für Ausweich- und Mitigationsmanöver gleichermaßen wirkt, und insbesondere kann somit zwischen diesen abgewägt werden. Hierbei werden Unsicherheiten explizit modelliert und berücksichtigt, sodass die Auswahl rein auf dem Risiko der möglichen Trajektorien basiert ohne zum Beispiel eine Vorauswahl/Vornebenbedingung bezüglich eines Ausweichens oder Mitigierens zu treffen beziehungsweise zu stellen. Insbesondere wird hierbei das Risiko in der Trajektorienplanung auf instantaner Ebene inklusive der Aufteilung in Kollisionswahrscheinlichkeit und Schwere genutzt.

Insbesondere ermöglicht somit das vorgestellte Verfahren eine robuste Unterscheidung zwischen Ausweichen und Mitigation unter Unsicherheiten in der Trajektorienplanung. Insbesondere kann beispielsweise als Trajektorie eine Notfalltrajektorie bestimmt werden. Hierbei werden kombinierte Lenk- und Bremsmanöver berücksichtigt. Letztendlich kann die Sicherheit im Straßenverkehr dadurch erhöht werden. Ferner kann eine statistische Trefferlagenadressierung und somit die Erhöhung der Sicherheit im Straßenverkehr ermöglicht werden. Die geringe Rechenzeit ermöglicht es in der Verhaltensausplanung des Kraftfahrzeugs zum Beispiel eine automatisierte Trajektorienplanung oder bei der Überwachung des Fahrers im assistierten Fortbewegen unter Echtzeitbedingungen für eine Vielzahl von Trajektorien das Risiko zu bestimmen und somit Handlungsoptionen zu vergleichen. Ferner ist dies eine effiziente Lösung, welche wesentlich schneller als Monte-Carlo basierte Verfahren bei vergleichbarer Genauigkeit ist. Insbesondere weist das vorgestellte Verfahren eine hohe Genauigkeit und eine gleichzeitig schnelle Berechnung auf, auch ohne beispielsweise eine Monte-Carlo-Simulation oder ein numerisches Integrationsverfahren zu verwenden. Insbesondere handelt es sich nämlich um ein deterministisches Verfahren, im Gegensatz zur Monte-Carlo-Simulation. Dadurch ist die Rechenlaufzeit abschätzbar und die Rechenlaufzeit ist unabhängig von der Sample-Anzahl oder der Diskretisierungsschritte.

Insbesondere ist somit vorgeschlagen, dass mittels der Umgebungserfassungsvorrichtung das Umfeld erfasst wird, wobei hierbei insbesondere Objektposen und deren Unsicherheiten zum Objekt bestimmt werden können. Ferner werden auch Unsicherheiten das Kraftfahrzeug betreffend berücksichtigt.Das Umfeld wird in die Zukunft projiziert und auf Basis dieser Informationen wird eine sichere Trajektorie geplant. Es wird das Risiko bestimmt, wobei das Risiko in Abhängigkeit von einer Kollisionswahrscheinlichkeit und einer wahrscheinlichsten Trefferkonstellation bestimmt wird. Ferner wird die Unfallschwere für die wahrscheinlichste Trefferkonstellation konkret ermittelt und die Kollisionswahrscheinlichkeit und die Schwere entsprechend gewichtet. Es erfolgt dann die Trajektorienplanung auf Basis des Risikos. Beispielsweise kann dann in kritischen Situationen ein Notmanöver durchgeführt werden, wobei dies auf einer robusten Entscheidung, basierend auf Wahrscheinlichkeitstheorie, zwischen Ausweichen und Mitigation unter Unsicherheiten in kritischen Situation durchgeführt wird, um letztendlich kombinierte Lenk- und Bremseingriffe zur Steigerung der Verkehrssicherheit durchzuführen. Im Anschluss daran kann das Kraftfahrzeug das ermittelte Notmanöver durchführen. Es kann dann zusätzlich ein Nachjustieren realisiert werden, in dem wiederum von vorne mit dem Verfahren begonnen wird.

Insbesondere kann das folgende Verfahren sowohl auf ein Fahrzeug im zweidimensionalen Straßenverkehr als auch auf Verfahren im dreidimensionalen Bereich, also beispielsweise für Flugzeuge oder Ähnliches, angewendet werden, soweit dies hier sinnvoll ist für eine Unfallschwere. Die Anwendung ist insbesondere für die Trajektorie vorgesehen. Es ist aber auch möglich, die vorgestellte Kritikalitätsmetrik auf Basis des Risikos im regulären Fahren zu benutzen. Die vorgestellte Erfindung kann dabei sowohl im automatisierten Fahren als auch im assistierten Fahren benutzt werden. Wenn im automatisierten Fahren das Risiko einer Trajektorie fortlaufend geschätzt und minimiert werden kann, kann zusätzlich im assistierten Fahren auf Basis des Risikowertes eingegriffen werden.

Bei dem Objekt kann es sich um ein statisches Objekt oder auch um ein dynamisches Objekt handeln.

Gemäß einer vorteilhaften Ausgestaltungsform wird als Trajektorie ein Ausweichmanöver gegenüber dem Objekt oder ein Mitigationsmanöver zum Objekt bestimmt. Insbesondere ist beim Ausweichmanöver ein Unfall verhindert. Mit anderen Worten findet im Ausweichmanöver kein Unfall statt. Beim Mitigationsmanöver ist insbesondere vorgesehen, dass zwar eine Berührung beziehungsweise eine Kollision vorgesehen ist, jedoch wird diese abgemildert im Gegensatz zu dem eigentlich bestimmten Unfall. Mit anderen Worten kann beispielsweise eine Lenkung beziehungsweise eine Bremsung derart durchgeführt werden, dass die Kollision abgeschwächt wird, sodass ein Zusammenstoß geringer ausfällt, als vorher bestimmt.

Ferner hat es sich als vorteilhaft erwiesen, wenn bei der Trajektorie zumindest teilweise assistiert in eine Längsbeschleunigungseinrichtung und/oder eine Querbeschleunigungseinrichtung des Kraftfahrzeugs eingegriffen wird. Insbesondere kann somit sowohl das Kraftfahrzeug gelenkt werden als auch abgebremst werden. Alternativ kann auch das Kraftfahrzeug beschleunigt werden. Insbesondere kann somit die Bewegung des Kraftfahrzeugs entsprechend angepasst werden, um beispielsweise das Ausweichmanöver oder das Mitigationsmanöver durchzuführen.

Ferner hat es sich als vorteilhaft erwiesen, wenn als Unsicherheit eine Positionsunsicherheit des Objekts und/oder der Positionsunsicherheit des Kraftfahrzeugs und/oder eine Posenunsicherheit des Objekts und/oder eine Posenunsicherheit des Kraftfahrzeugs bestimmt werden. Ferner können auch Parameterunsicherheiten das Objekt und das Kraftfahrzeug betreffend, beispielsweise bezüglich der Dimension der Fahrzeugkontur, berücksichtigt werden. Insbesondere sind die mittels der Umgebungserfassungseinrichtung bestimmten Informationen mit Unsicherheiten behaftet. Beispielsweise ist die bestimmende Position des Objekts mit einer entsprechenden Unsicherheit behaftet. Ferner kann auch die eigene Position des Kraftfahrzeugs mit einer entsprechenden Unsicherheit behaftet sein. Des Weiteren kann die bestimmte Pose des Objekts und des Kraftfahrzeugs mit einer entsprechenden Unsicherheit behaftet sein. Diese Unsicherheit wird nun bei der Trajektorienplanung berücksichtigt.

Ebenfalls vorteilhaft ist, wenn auf einer instantanen Ebene für die zukünftige Umgebung die Bestimmung des Risikowerts durchgeführt wird. Mit anderen Worten wird für mehrere Zeitpunkte in der Zukunft der Risikowert bestimmt. Insbesondere wird dann in jedem instantenen Zeitpunkt und für jede entsprechende Trajektorie das Risiko bestimmt. Somit kann eine vollumfängliche Risikoabschätzung durchgeführt werden.

In einer weiteren vorteilhaften Ausgestaltungsform wird die Bestimmung der Trajektorie, insbesondere die Bestimmung des Risikowerts, in Echtzeit durchgeführt. Insbesondere kann somit das Verfahren im Fahrbetrieb des Kraftfahrzeugs angewendet werden. Insbesondere ist dies somit in Echtzeit durchführbar, wodurch das Verfahren für den täglichen Betrieb im Kraftfahrzeug genutzt werden kann. Insbesondere aufgrund der geringen Rechenkapazität, insbesondere gegenüber beispielsweise einer sogenannten Monte-Carlo-Simulation, kann das Verfahren zuverlässig eingesetzt werden, wodurch die Sicherheit im Straßenverkehr in Echtzeit verbessert werden kann. Die Echtzeitfähigkeit wird insbesondere durch Approximationen an entsprechender Stelle sichergestellt. Einerseits beruht die Berechnung der Kollisionswahrscheinlichkeit auf der Minkowski-Differenz. Andererseits wird eine repräsentative Trefferkonstellation, welche insbesondere der wahrscheinlichsten Trefferkonstellation entspricht, extrahiert, um auf Basis dessen effizient die Unfallschwereberechnung zu ermöglichen.

Gemäß einer weiteren vorteilhaften Ausgestaltungsform wird die Bestimmung der wahrscheinlichsten Trefferkonstellation auf Basis einer Minkowski-Differenz und einer linearen Transformation durchgeführt. Insbesondere ist die Minkowski-Differenz und die lineare Transformation eine rechenkapazitätseinsparende Möglichkeit die wahrscheinlichste Trefferkonstellation zu bestimmen. Insbesondere finden dabei entsprechende Approximationen statt, sodass die wahrscheinlichste Trefferkonstellation in Echtzeit bestimmt werden kann. Somit kann verbessert die Trajektorie bestimmt werden, wodurch die Sicherheit im Straßenverkehr erhöht werden kann. Insbesondere wird somit das Verfahren zur Bestimmung der wahrscheinlichsten Trefferkonstellation über die Minkowski-Differenz und über die lineare Transformation durchgeführt. Insbesondere die Berechnung der komplexen Unfallschwere benötigt eine entsprechende Modellierung der Eingangsgrößen. Für die Unfallschwere ist die Trefferkonstellation von großer Bedeutung. Das erfindungsgemäße Verfahren beschreibt explizit, welche instantanen Unfallkonstellationen mit welcher Wahrscheinlichkeit auftreten, um somit gezielt beziehungsweise effizient eine Unfallschwere zu bestimmen. Eine komplexe Unfallschwere ermöglicht eine gewisse Differenzierung von Trefferlagen, insbesondere im statistischen Sinne, um somit die Sicherheit der Verkehrsteilnehmer zu steigern. Insbesondere wird somit die wahrscheinlichste Trefferkonstellation bezüglich der Wahrscheinlichkeit für Trefferkonstellationsbereiche bestimmt, um repräsentative Elemente für die Schwere zu bestimmen.

Ebenfalls vorteilhaft ist, dass eine Verteilung der Unfallschwere bei der Bestimmung des Risikowerts berücksichtigt wird. Insbesondere, falls die wahrscheinlichste Trefferkonstellation für die Unfallschwere nicht genügt, kann auch eine Verteilung der Unfallschwere angegeben werden, wobei dies beispielsweise ermittelt wird über eine Gauß-Unsicherheitsfortpflanzung, und somit unter Beachtung von Vertrauensintervallen, wodurch die Unfallschwere ermittelt werden kann.

Bei dem vorgestellten Verfahren handelt es sich insbesondere um ein computerimplementiertes Verfahren. Ein weiterer Aspekt der Erfindung betrifft daher ein Computerprogramm mit Programmcodemitteln, welche eine elektronische Recheneinrichtung dazu veranlassen, wenn die Programmcodemittel von dieser abgearbeitet werden, ein Verfahren nach dem vorhergehenden Aspekt durchzuführen. Daher betrifft die Erfindung auch ein computerlesbares Speichermedium mit einem entsprechenden Computerprogrammprodukt.

Ein nochmals weiterer Aspekt der Erfindung betrifft ein Assistenzsystem für ein zumindest teilweise assistiert betriebenes Kraftfahrzeug zum Bestimmen einer Trajektorie, zumindest einer Umgebungserfassungseinrichtung mit einer elektronischen Recheneinrichtung, wobei das Assistenzsystem zum Durchführen eines Verfahrens nach dem vorhergehenden Aspekt ausgebildet ist. Insbesondere wird das Verfahren mittels des Assistenzsystems durchgeführt.

Die elektronische Recheneinrichtung weist insbesondere elektrische Bauteile, insbesondere integrierte Schaltkreise, Prozessoren und weitere elektronische Bauteile auf, um ein entsprechendes Verfahren durchführen zu können.

Ein nochmals weiterer Aspekt der Erfindung betrifft ein Kraftfahrzeug mit einem Assistenzsystem nach dem vorhergehenden Aspekt. Das Kraftfahrzeug ist insbesondere zumindest teilweise assistiert betrieben. Bevorzugt ist das Kraftfahrzeug vollautomatisiert betrieben.

Zu der Erfindung gehören auch Weiterbildungen des erfindungsgemäßen Assistenzsystems sowie des Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Assistenzsystems sowie des erfindungsgemäßen Kraftfahrzeugs hier nicht noch einmal beschrieben.

Die Erfindung umfasst auch die Kombination der Merkmale der beschriebenen Ausführungsformen.

Im Folgenden werden Ausführungsbeispiele der Erfindung beschrieben. Hierzu zeigt:

Fig. 1     eine schematische Draufsicht auf ein Kraftfahrzeug mit einer Ausführungsform eines Assistenzsystems;

Fig. 2     ein schematisches Ablaufdiagramm gemäß einer Ausführungsform des Verfahrens;

Fig. 3     eine schematische Draufsicht auf eine erste Verkehrssituation; und

Fig. 4     eine weitere schematische Draufsicht auf eine weitere Verkehrssituation.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

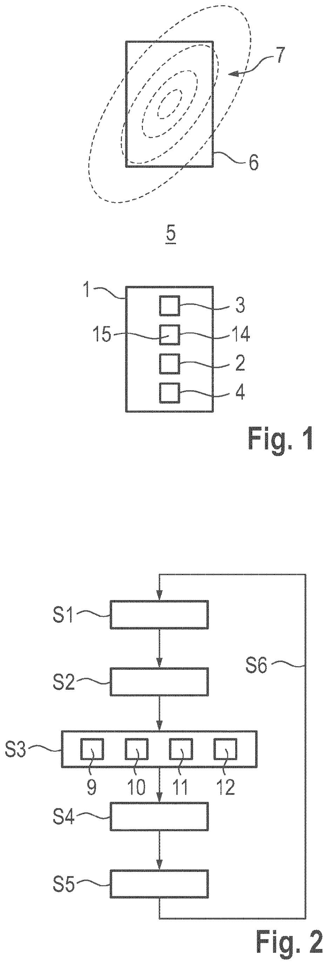

Fig. 1 zeigt eine schematische Draufsicht auf ein Kraftfahrzeug 1 mit einer Ausführungsform eines Assistenzsystems 2. Das Kraftfahrzeug 1 ist zumindest teilweise assistiert betrieben. Insbesondere kann somit das Assistenzsystem 2 beispielsweise in eine Querregelung beziehungsweise in eine Längsregelung des Kraftfahrzeugs 1 eingreifen. Das Kraftfahrzeug 1 kann auch vollautomatisiert sein. Das Assistenzsystem 2 weist zumindest eine Umgebungserfassungseinrichtung 3 sowie eine elektronische Recheneinrichtung 4 auf. Mittels der Umgebungserfassungseinrichtung 3 kann eine Umgebung 5 sowie ein weiteres Objekt 6, vorliegend ein weiteres Kraftfahrzeug erfasst werden. Insbesondere kann die Objektpose des Objekts 6 erfasst werden. Beim Erfassen des weiteren Kraftfahrzeugs kann insbesondere eine Unsicherheit 7 auftreten. Insbesondere handelt es sich bei dieser Unsicherheit 7 um beispielsweise eine Posenunsicherheit des weiteren Kraftfahrzeugs oder um eine Positionsunsicherheit des weiteren Kraftfahrzeugs. Auch das Kraftfahrzeug 1 kann eine Positionsunsicherheit und eine Posenunsicherheit aufweisen. Ferner kann auch eine Parameterunsicherheit, beispielsweise bezüglich der Dimension der Kontur des Objekts 6 oder des Kraftfahrzeugs 1, berücksichtigt werden.

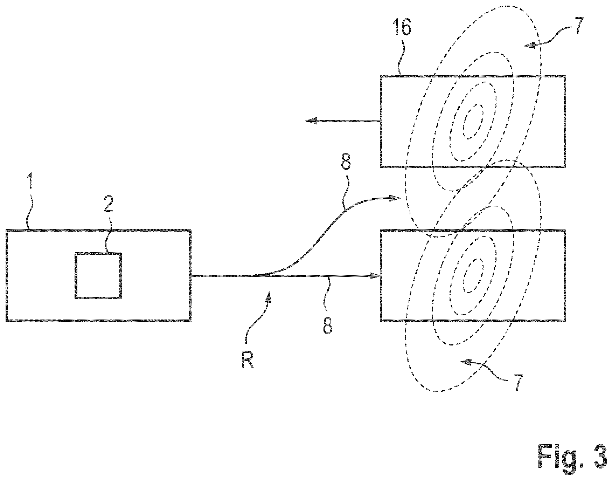

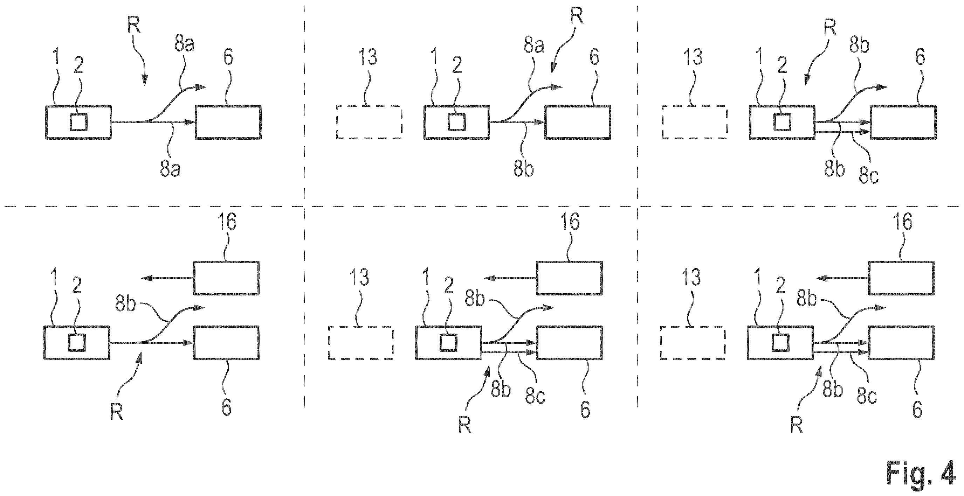

Fig. 2 zeigt ein schematisches Ablaufdiagramm gemäß einer Ausführungsform des Verfahrens. Insbesondere ist gezeigt, dass mittels des Assistenzsystems 2 eine Trajektorie 8 (Fig. 3) des zumindest teilweise assistiert betriebenen Kraftfahrzeugs 1 bestimmt werden kann. Hierzu wird in einem ersten Schritt S1 mittels der Umgebungserfassungseinrichtung 3 zumindest das Objekt 6 in der Umgebung 5 des Kraftfahrzeugs 1 erfasst und es wird die Unsicherheit 7 zum Objekt 6 mittels der elektronischen Recheneinrichtung 4 des Assistenzsystems 2 bestimmt. Es wird in Abhängigkeit von der erfassten Umgebung 5 und dem erfassten Objekt 6 in einem zweiten Schritt S2 eine zukünftige Umgebung 5 mit dem Objekt 6 mittels der elektronischen Recheneinrichtung 4 prädiziert. In einem dritten Schritt S3 wird ein Risikowert R (Fig. 3) für eine geplante Trajektorie 8a, 8b, 8c (Fig. 4) auf Basis einer mittels der elektronischen Recheneinrichtung 4 bestimmten Kollisionswahrscheinlichkeit 9 und einer bestimmten wahrscheinlichsten Trefferkonstellation 10 und einer bestimmten Unfallschwere 11 für die wahrscheinlichste Trefferkonstellation 10 bestimmt, wobei im Risikowert R die Kollisionswahrscheinlichkeit 9 und die Unfallschwere 11 auf Basis eines Gewichts 12 gewichtet werden, und wobei in Abhängigkeit von dem bestimmten Risikowert R die Trajektorie 8 bestimmt wird. Die Bestimmung der Trajektorie 8 ist vorliegend insbesondere durch den vierten Schritt S4 gezeigt. In einem fünften Schritt S5 wiederum kann dann das ermittelte Notmanöver, also die Trajektorie 8, durchgeführt werden. Es kann dann in einem sechsten Schritt S6 wiederum ein Nachjustieren durchgeführt werden, in dem wieder zum ersten Schritt S1 zurückgegangen wird, wodurch eine fortlaufende Optimierung der Fahrzeughandlung realisiert werden kann.

Insbesondere kann vorgesehen sein, dass als Trajektorie 8 ein Ausweichmanöver 8a (Fig. 4) gegenüber dem Objekt 6 oder ein Mitigationsmanöver 8c (Fig. 4) zum Objekt 6 bestimmt wird. Ferner kann bei einer Trajektorie 8 zumindest teilweise assistiert in eine Längsbeschleunigungseinrichtung 14 und/oder eine Querbeschleunigungseinrichtung 15 des Kraftfahrzeugs 1 eingegriffen werden.

Wie bereits erwähnt, kann als Unsicherheit 7 eine Positionsunsicherheit des Objekts 6 und/oder eine Positionsunsicherheit des Kraftfahrzeugs 1 bestimmt werden. Ferner kann auch eine Posenunsicherheit des Objekts 6 sowie eine Posenunsicherheit des Kraftfahrzeugs 1 bestimmt werden. Ferner kann auch die Parameterunsicherheit bestimmt werden.

Insbesondere ist dabei vorgesehen, dass die Bestimmung der Trajektorie 8, insbesondere die Bestimmung des Risikowerts R, in Echtzeit durchgeführt wird.

In der Fig. 3 ist insbesondere eine erste Verkehrssituation des Kraftfahrzeugs 1 beschrieben. Das Kraftfahrzeug 1 fährt geradeaus, und es erscheinen "plötzlich" das Objekt 6 als weiteres Kraftfahrzeug, beispielsweise aufgrund eines Ausparkmanövers des weiteren Kraftfahrzeugs oder aufgrund einer Vorfahrtnahme des weiteren Kraftfahrzeugs, sowie ein weiteres Objekt 16 als nochmals weiteres Kraftfahrzeug und als Gegenverkehr auf. Das eine weitere Kraftfahrzeug bleibt auf der gleichen Spur wie das Kraftfahrzeug 1 und behindert somit die Weiterfahrt. Dabei ist der letzte Punkt zum Bremsen mit Kollisionsvermeidung für das Kraftfahrzeug 1 bereits überschritten. Trotzdem könnte die Kollision mit dem Objekt 6 durch Ausweichen vermieden werden. In diesem Ausführungsbeispiel behindert der Gegenverkehr ein klares beziehungsweise sicheres Ausweichmanöver 8a. Für eine entsprechende Simulation einer solchen Verkehrssituation kann eine Testfahrt mit wechselndem, aber vordefiniertem Unsicherheitsgrad in Bezug auf die auftretenden Objekte 6, 16 wiederholt werden.

Das Szenario erfordert eine Wahl zwischen zwei ungünstigen Möglichkeiten. Auf der einen Seite würde das Bremsen die Kollision mit dem Objekt 6 abmildern, aber auch einen sicheren Unfall verursachen und bildet somit ein Mitigationsmanöver 8c. Auf der anderen Seite bietet das Ausweichen die Chance der Kollisionsvermeidung mit beiden Objekten 6, 16, aber wenn es fehlschlägt, kommt es zur Kollision mit noch höherer Schwere wegen der hohen Relativgeschwindigkeit bezogen auf den Gegenverkehr. Mit anderen Worten, wenn es möglich ist, ein sicheres Ausweichmanöver 8a vorherzusagen, wird dieses der Kollisionsmitigation vorgezogen. Umgekehrt, wenn die Kollisionsvermeidung nicht möglich ist, wird die Minderung bevorzugt. Dabei hängt die Entscheidung von der potentiellen Unfallschwere 11 und ihrer Unsicherheit 7 dem Risikowert R, ab. Mit anderen Worten, eine geringe Unsicherheit 7 erlaubt eine fundierte Entscheidung für das Ausweichmanöver 8a. Wenn die Unsicherheit 7 jedoch zu hoch ist, wird die Kollisionsminderung gewählt.

Die Existenz- und Klassifizierungsunsicherheiten werden im Folgenden als am wahrscheinlichsten angesehen. Mit anderen Worten, ein Objekt 6 ist entweder vorhanden oder nicht und im Falle der Existenz wird nur eine Objektklasse zugeordnet. Daher vereinfacht sich eine Gleichung zur Bestimmung des Risikowerts zu:

$$R(\pi) = \sum_{i=1}^{N_{\text{inst}}} \underbrace{\sum_{k=1}^{N_O} \sum_{j=1}^{N_H} p(h_k^j) \cdot R(\text{EK}_{i,k}^j)}_{:=R_{f,t_i}} \quad (1)$$

Außerdem werden die Unsicherheiten der Länge $l_{E,k}$ und Breite $w_{E,k}$ vernachlässigt. Bezogen auf das Objekt 6, basiert das auf der Annahme, dass der geometrische Stoß mit der Objektpose überlagert wird. Die Ego-Fahrzeuglänge $l_E$ und -breite $w_E$ werden aufgrund von Konstruktionsinformationen unabhängig vom Planungsprozess als bekannt vorausgesetzt.

Die Unfallschwere 11 eines Teilzustandes wird modelliert als Zufallsvariable mit einem Stichprobenraum, der alle möglichen Objektkonstellationen zwischen dem Ego-Fahrzeug und einem Zielobjekt (unfallfrei, Unfallkonstellation, etc.) mit der Wahrscheinlichkeit und der Wahrscheinlichkeitsdichtefunktion angibt. Dementsprechend kann der Erwartungswert R berechnet werden durch:

$$R(\text{EK}) = E(\Psi) = \int_{\Omega^{\text{voc}}} \Psi(\omega) \cdot dP(\omega) \quad \overset{discretisation}{\Longrightarrow} \quad E(\Psi) = \sum_n \psi_n \cdot p_n \quad (2)$$
$$= \int_{\omega \in \Omega^{\text{voc}}} \psi(\omega) p_{\Omega^{\text{voc}}}(\omega) d\omega$$

Auf diese Weise wird der Schweregrad der inkrementellen Schaden Y(w) und ihre inkrementellen Eintretenswahrscheinlhckeiten dP(w) kombiniert, nämlich das inkrementelle Risko dR, dass wiederum zum Risiko R(EK) des Teilzustandes aggregiert wird. Der Schweregrad Y wird nach den Vorhersagemodellen h mit dem Eingangsvektor gemäß dem Umgebungsmodell bestimmt. Entsprechend wird das Risiko R(EK) mit der gemeinsamen Wahrscheinlichkeitsdichtefunktion bestimmt, während der geometrische Zustand des Kraftfahrzeugs 1 und des Objekts 6, und ein Parametervektor gegenseitig stochastisch unabhängig modelliert werden können:

$$R(\text{EK}) = E(\Psi) = \int_{\tilde{g}_E} \int_{\tilde{g}_K} \int_{P_E} \int_{P_K} \eta(\mathbf{z})\; p_{X_E,Y_E,\Phi_E}(x_E, y_E, \varphi_E)\; p_{X_K,Y_K,\Phi_K}(x_K, y_K, \varphi_K)\;\cdot$$

$$p_{P_E}(\mathbf{p}_E)\; p_{P_K}(\mathbf{p}_K)\;\; \mathrm{d}\tilde{g}_E\;\; \mathrm{d}\tilde{g}_K\;\; \mathrm{d}\mathbf{p}_E\;\; \mathrm{d}\mathbf{p}_K \tag{3}$$

Unter der Annahme eines kooperativen Verhaltens zwischen durchschnittlichen Verkehrsteilnehmern überschätzt die Unabhängigkeit zwischen dem Kraftfahrzeug 1 und dem Objekt 6 das Risiko R(EK) und ist daher eine konservative Näherung. Aufgrund der Normalverteilungen von Z gibt es jedoch keine analytische Lösung. Außerdem sind stichprobenartige Berechnungen oder numerische Integrationen aufgrund des Rechenzeitbedarfs nicht geeignet. Daher befasst sich der nachfolgende Abschnitt mit geeigneten Näherungen zu der oben aufgezeigten Gleichung.

Ein Schweregrad Y > 0 tritt nur auf, wenn ein Unfall eintritt. Daher wird die Gleichung auf die geometrischen Größen bezüglich der Wahrscheinlichkeit des Auftretens eines Unfalls (I) und eines Schadens (II) getrennt aufgeteilt:

$$2R(\text{EK}) = E(\Psi) = \int_{\tilde{g}_E} \int_{\tilde{g}_K} \eta_{\text{ind}}(\mathbf{z})\; p_{X_E,Y_E,\Phi_E}(x_E, y_E, \varphi_E)\; p_{X_K,Y_K,\Phi_K}(x_K, y_K, \varphi_K)\;\cdot \tag{I}{(4)}$$

$$\Big[\int_{\tilde{g}_E|\text{coll}} \int_{\tilde{g}_K|\text{coll}} \int_{P_E} \int_{P_K} \eta(\mathbf{z})\;\cdot$$

$$p_{\tilde{G}_E|\text{coll}}(\tilde{g}_E|\text{coll})\; p_{\tilde{G}_K|\text{coll}}(\tilde{g}_K|\text{coll})\;\cdot \tag{II}$$

$$p_{P_E}(\mathbf{p}_E)\; p_{P_K}(\mathbf{p}_K)\; \mathrm{d}\tilde{g}_E\; \mathrm{d}\tilde{g}_K\; \mathrm{d}\mathbf{p}_E\; \mathrm{d}\mathbf{p}_K\Big]\; \mathrm{d}\tilde{g}_E\; \mathrm{d}\tilde{g}_K$$

$$\eta_{\text{ind}}(\mathbf{z}) = \begin{cases} 1 & \vartheta(x_E, y_E, \varphi_E, l_E, w_E) \wedge \vartheta(x_K, y_K, \varphi_K, l_K, w_K) \neq \varnothing \\ 0 & \vartheta(x_E, y_E, \varphi_E, l_E, w_E) \wedge \vartheta(x_K, y_K, \varphi_K, l_K, w_K) = \varnothing \end{cases} \tag{5}$$

Diese Funktion meldet eine Kollision, wenn sich die Fahrzeugkonturbereiche J überschneiden, abhängig von den geometrischen Zuständen

Zur Unterscheidung verschiedener Kollisionskonfigurationen gibt der zweite Teil II) von der oben aufgeführten Gleichung die Unfallschwere 11 für jede Unfallkonstellation an. Auch hier gibt es aufgrund der Modellierung mit Normalverteilungen keine geschlossene Lösung. Außerdem ist das Schwerevorhersagemodell h(Z) nichtlinear und verformt die Form der Normalverteilung. Einerseits könnte das Integral II) durch die Permutation über die Kollisionskonfigurationen mit y > 0 gelöst werden. Als Ergebnis ändert sich die Gleichung zu:

$$R(\text{EK}) = E(\Psi) = \underbrace{P(C)}_{I)} \cdot \underbrace{\sum_{n=1}^{N_{\text{coll.const.}}} P(z_n \mid \text{coll}) \cdot \eta(\mathbf{z}_n)}_{II)} \tag{6}$$

Die Genauigkeit hängt hier direkt von der Diskretisierung ab. Theoretisch können mit einer unendlich kleinen Schrittweite beziehungsweise unendlich vielen Kollisionskonstellationen die Erwartungswerte der Schwere E(Y) und damit das Risiko R(EK) exakt berechnet werden. Noch kleinere Zahlen erfordern jedoch eine hohe Rechenzeit, die für Echtzeitanwendungen nicht geeignet ist. Alternativ liefert die Unsicherheitsfortpflanzung durch das Schweregradmodell h eine Verteilung des Schweregrads unabhängig von beliebigen Diskretisierungen. Außerdem ermöglicht es, neben dem Erwartungswert verschiedene Quantile yp-Quantil des Schweregrades auszuwerten.

Diese Approximation könnte für zusätzliche Sicherheitsmargen verwendet werden. Da stichprobenbasierte Ansätze nicht für Echtzeitanwendungen geeignet sind , erfordert die Form einer Normalverteilung eine lineare Unsicherheitsfortpflanzung, um die Verteilung nicht zu deformieren:

$$\Psi_{\text{coll}} = \eta(\mathbf{Z} \mid \text{coll}) \stackrel{\text{linearisation}}{\Longrightarrow} \tilde{\Psi}_{\text{coll}} \sim \mathcal{N}(\mu_{\tilde{\Psi}}, \Sigma_{\tilde{\Psi}}) \quad \text{with} \tag{7}$$

$$\mu_{\tilde{\Psi}} = \eta(\mu_{Z \mid \text{coll}})$$

$$\Sigma_{\tilde{\Psi}} = \nabla\eta|_{\mu_{Z \mid \text{coll}}}\; \Sigma_Z\; \nabla\eta|_{\mu_{Z \mid \text{coll}}}^{\mathrm{T}}$$

Hier gibt V(h) die Jacobi-Matrix des Schweregradvorhersagemodells an, die an dem Punkt mZ ausgewertet wird.

Das Hauptziel ist die Abschätzung des Risikos R beziehungsweise des Erwartungswertes. Daher ändert sich die Gleichung (4) zu:

$$R(\text{EK}) = E(\Psi) = \underbrace{P(C)}_{I)} \cdot \underbrace{E(\Psi_{\text{coll}})}_{II)} \quad (8)$$

Unter der Annahme symmetrischer, abflachender Eingangsverteilungen, wie zum Beispiel der Normalverteilung, ist der Erwartungswertgleich dem Schweregrad der wahrscheinlichsten Kollisionskonfiguration. Das führt zur Risikoabschätzung:

$$R(\text{EK}) = E(\Psi) = \underbrace{P(C)}_{I)} \cdot \underbrace{\psi_{\text{Pmax}}}_{II)} \quad (9)$$

Zusammenfassend wird die oben aufgeführte Risikobewertung für jeden momentanen Teilzustand zEK in der Auswertung vorliegend verwendet. Dies dient jedoch nur zur Vereinfachung des erfindungsgemäßen Gedankens und ist keinesfalls als abschließend zu betrachten. Es können auch andere vorgestellte Risikobewertungen genommen werden.

Die Trennung in Kollisionswahrscheinlichkeit 9 und Unfallschwere 11 sorgt für die Trennung zwischen präventivem Fahren und Notfallmanövern. Beim regulären Fahren ist die Unfallschwere 11 im Vergleich zur Kollisionswahrscheinlichkeit 9 weniger wichtig. Hier sorgen die Kollisionswahrscheinlichkeiten 9 für sicheres Fahren. Im Gegensatz dazu unterscheidet die Schwere unterschiedliche Kollisionskonfigurationen bei Notfahrmanövern.

Außerdem ergibt sich bei einem kurzen Abstand zur möglichen Kollision eine hohe Auflösung eines Markov's Entscheidungsprozesses bezüglich der Kollisionskonfigurationen. Die wahrscheinlichste Unfallkonfiguration bestimmt die Unfallschwere 11. Hier wird eine Annahme über die Form der Verteilung getroffen. Die Eingabeform muss symmetrisch abflachend sein, um für exakte Berechnungen zu gelten. Andernfalls handelt es sich um eine leichte Annäherung im Vergleich zu den Ungenauigkeiten des Schwerevorhersagemodells, die aufgrund der geringeren Anzahl von Berechnungen Echtzeitanwendungen ermöglicht. Die verwendeten Normalverteilungen der Eingaben stellen einen Spezialfall einer symmetrischen abflachenden Verteilung dar. Außerdem wird die wahrscheinlichste geometrische Kollisionskonfiguration mit ähnlichen Mechanismen, wie bei der Berechnung der Kollisionswahrscheinlichkeit 9 verwendet, und somit mit geringem Rechenaufwand abgeleitet. Alle anderen Eingangsparameter zur Bestimmung der Unfallschwere sind nicht bedingt und können somit direkt aus den jeweiligen Verteilungen abgeleitet werden.

Die Trennung in Kollisionswahrscheinlichkeit 9 nach I) und Unfallschwere 11 nach II) ermöglicht zudem die Verwendung etablierter nichtlinearer Verfahren zur effizienten Schätzung der Kollisionswahrscheinlichkeit 9. Darüber hinaus konnte die Schwereverteilung durch die Gaußsche Unsicherheitsfortpflanzung abgeleitet werden. Als Ergebnis sind detaillierte Sicherheitsanforderungen einstellbar und damit offen für zukünftige Normen.

Nach dem Verfahren der bivariaten Kollisionswahrscheinlichkeit 9 ist die wahrscheinlichste geometrische Kollisionskonfiguration direkt identifizierbar. Die Äquipotentiale der standardisierten Normalverteilung sind konzentrische Kreise um den Ursprungspunkt. Daher gibt der kürzeste Abstand zum Kollisionsbereich, der vorliegend durch eine Minkowski-Differenz beschrieben wird, die wahrscheinlichste geometrische Kollisionskonfiguration an. Es ist entweder ein Scheitelpunkt direkt oder ein Punkt zwischen den beiden kürzesten Scheitelpunkten. Die Minkwoski-Differenz kann dabei außerdem in Teilbereiche unterteilt werden, die Kollisionskonfigurationen repräsentieren, die die geometrischen Merkmale des Schwerevorhersagemodells h permutieren. Schließlich korreliert die Zuordnung aufgrund des linearen Zusammenhangs mit dem untransformierten Kollisionsbereich und somit ergibt sich die Eingabe für die Schwerevorhersage.

In der Fig. 4 ist ein weiteres Verkehrsszenario dargestellt. Dieses Szenario dient dazu, die Mitigationsleistung des risikobasierten Planers zu beschreiben. Die Fig. 4 beschreibt, dass das Kraftfahrzeug 1 geradeaus fährt, wobei "plötzlich" ein potentielles Kollisionsobjekt, vorliegend das Objekt 6, auftritt. Dies kann beispielsweise bei einem Ausparken des Objekts 6, erfolgen. Folglich muss das Kraftfahrzeug 1 ein Notmanöver durchführen. Dabei stehen je nach Objektentfernung unterschiedliche Möglichkeiten zur Verfügung. Die zugrundeliegenden Geschwindigkeiten bewirken, dass der letzte Punkt zum Bremsen vor dem letzten Punkt zum Lenken für eine Unfallvermeidung überschritten wird. Wenn der Abstand groß genug ist, steht es dem Kraftfahrzeug 1 frei, ein geeignetes Ausweichmanöver 8a zur Verhinderung einer Kollision auf Basis der Risikobewertung zu wählen. Verringert sich der Abstand, ist eine Kollision nur noch durch Lenken vermeidbar. Wenn das Objekt 6 sehr plötzlich auftaucht, ist eine Vermeidung nicht mehr möglich, aber ein Mitigationsmanöver 8c kann die Aufprallschwere noch reduzieren. In der Fig. 4 ist ferner das bereits "weitergefahrenen" Kraftfahrzeug 1 mit dem Bezugszeichen 13 versehen. Durch das Bezugszeichen 8b ist insbesondere die Kollisionstrajektorie beziehungsweise das Kollisionsmanöver ohne entsprechenden Eingriff des Assistenzsystem dargestellt.

Darüber hinaus zeigt die Fig. 4 eine Modifikation des oben vorgestellten Szenarios dar. Hier erscheinen zwei Objekte 6, 16 vor dem Kraftfahrzeug 1. Dabei behindert das weitere Objekt 16 ein kollisionsfreies Notausweichmanöver. Das heißt, eine Kollision wird früher unvermeidbar als in der Szenario-Variante zuvor. Aber auch hier hat das Kraftfahrzeug 1 noch die Möglichkeit, die Kollisionsschwere zu mindern, um die maximale Sicherheit zu gewährleisten.

Während das weitere Objekt 6 regulär auf der Nachbarspur fahren darf, missachtet das Objekt 6 die Vorfahrt und fährt beispielsweise hinter den verdeckenden parkenden Autos heraus. Außerdem erschweren diese geparkten Autos ein Kollisionsausweichmanöver nach rechts.

Zur Quantifizierung des Grads der Unfallschwere 11 von Crash-Folgen können verschiedene Maße definiert werden. Die Kennwerte variieren je nach Forschungsgebiet und spezifischem Interessenbereich. Ein Unfall liegt im Allgemeinen dann vor, wenn ungewollte Kräfte auf die Karosserie einwirken, die zu gesundheitlichen Beeinträchtigungen oder Schäden führen. Darüber hinaus wirken eine Vielzahl von Einflüssen auf den Crash-Ausgang, was eine objektive Quantifizierung der Unfallschwere 11, insbesondere durch wenige Einzelwerte, erschwert. So kann zum Beispiel der gleiche technische Unfallablauf zu völlig unterschiedlichen kurzfristigen Folgen für vitale und nicht-vitale Verkehrsteilnehmer führen, wobei die langfristigen Auswirkungen noch unsicherer sind. Daher wird der Bereich der Unfallschwere im Folgenden in vier Gruppen unterteilt,

Ein erste Gruppe bildet dabei die Fahrzeug- und Insassenbelastung, eine zweite Gruppe die technische Schwere, eine dritte Gruppe die Verletzungsschwere und eine vierte Gruppe die Langzeitfolgen.

Aufgrund von Vor- und Nachteilen bestimmen die jeweilige Anwendung und die Anforderungen das geeignete Schweregradmaß. Darüber hinaus führt die Verfügbarkeit von Daten zu notwendigen Näherungen.

Die technische Unfallschwere 11 quantifiziert die mechanische Fahrzeugbelastung durch Krafteinwirkungen, die zu Beschleunigung a(t), Geschwindigkeit v(t) und Verformung s(t) im Zeitverlauf führen.

Die technische Unfallschwere 11 ist unter Anderem abhängig von der Art der Kollisionsobjekte (Massen, Formen, Kompatibilität, etc.), der Geschwindigkeit und der Aufprallposition. Charakteristische Werte der Kinematik werden verwendet, um die Schwere durch Einzelwerte anzugeben. Dabei kommt es darauf an, wo und wie die Daten gewonnen werden. Während FEM-Simulationen, Crashtests und Event-Recordern detaillierte Informationen über den Crashverlauf (z. B. a(t), v(t) und s(t)) liefern, nehmen Polizei und Unfallermittler den Vorfall retrospektiv auf, indem sie das Fahrzeug nur in der Ruheposition vorfinden. Dennoch haben sich im Laufe der Jahre verschiedene Unfallschweremaße etabliert. So wird zum Beispiel die Deformationsenergie $\Delta T$ durch Rekonstruktion der Kraft über die Intrusion gewonnen. Da die Intrusion nach dem Aufprall gemessen wird, gibt sie nur den plastischen Energieaustausch an. Die Äquivalentenergie Geschwindigkeit (EES) setzt die Deformationsenergie $\Delta T$ als kinetische Energie in Beziehung zur Fahrzeugmasse m: $\Delta T = 0.5 m EES^2$. Die Rekonstruktion des Unfalls beinhaltet die Bestimmung der Geschwindigkeiten beim Aufprall, bezeichnet als vrel, sowie der Geschwindigkeitsänderung während des Crashs $\Delta v$.

Bezogen auf das eigene Fahrzeug belastet die äußere Krafteinwirkung den Fahrzeugaufbau und damit indirekt die Insassen. Folglich sind der Crashimpuls a(t) und die Intrusion s(t) die Hauptursachen für Verletzungen. Um den Schaden zu mindern, wird durch die Fahrzeugdeformation Energie aus der Fahrgastzelle entnommen.

Zusätzlich sind die Rückhaltesysteme so konstruiert, dass sie die Belastung der Insassen über die Crashzeit entsprechend der menschlichen Belastungsgrenzen verteilen. Trotzdem können auf den einzelnen Insassen starke Stöße einwirken. Diese werden zum Beispiel durch das Head Injury Criterion (HIC) oder Neck Injury Criterion (NIC) gemessen, die die Beschleunigung der jeweiligen Körperregion über ein bestimmtes Zeitintervall angeben. Das Gleiche gilt für andere Verkehrsteilnehmer, wie zum Beispiel gefährdete Verkehrsteilnehmer (VRU). Der einzige Unterschied liegt wahrscheinlich im Fehlen eines geeigneten Aufprallschutzes.

Die Verletzungsschwere hängt neben der Krafteinwirkung und dem Rückhaltesystem von den insassenbezogenen Merkmalen, wie Vitalität, Größe oder Geschlecht, und der Insassenposition im Fahrzeug ab. Die Abbreviated Injury Scale (AIS) ist ein in der Unfallforschung ein häufig verwendetes Maß zur Angabe und zum Vergleich des medizinischen Schweregrades.

Der AIS bewertet die Letalität von Einzelverletzungen. Der maximale AIS (MAIS) repräsentiert diese Einzelverletzungen von Körperregionen oder der gesamten Person durch ihren Maximalwert. Alternativ aggregiert der Injury Severity Score (ISS) die schwersten Traumata von drei Körperregionen quadratisch.

Darüber hinaus können die langfristigen Folgen in monetären Größen ausgedrückt werden, wie zum Beispiel Fahrzeugschäden und medizinische Kosten, oder in menschenbezogenen Eigenschaften, wie zum Beispiel Rekonvaleszenz, Überlebenswahrscheinlichkeit oder Letalitätsrate.

Zusammenfassend lässt sich sagen, dass es nach diesem Überblick keine All-in-One-Lösung gibt, um den Schaden einer Kollision auszudrücken. Vielmehr muss die Anwendung das geeignete Schweregradmaß bestimmen. Aufgrund des automatisierten Fahrens mit menschlichen Verkehrsteilnehmern ist in den genannten Ausführungsbeispielen der Schutz der Verkehrsteilnehmer nach ethischen Richtlinien das Ziel. Daher ist die Verletzungsschwere als Maß berücksichtigt worden. Allerdings sind die Verletzungsschweregrade sehr individuell, was eine objektive Crashbeurteilung erschwert, und lassen sich nur sehr schwer, wenn überhaupt, mit ausreichender Genauigkeit in Echtzeit vorhersagen. Darüber hinaus basiert das gewählte Anwendungsbeispiel in diesem Ausführungsbeispiel auf dem Aufprall der Fahrzeugstruktur. Sie erfordert nicht unbedingt eine Verletzungsschwere und kann durch die Fahrzeug-Crashdynamik ausgedrückt werden. Daher wird in diesen Ausführungsbeispielen die technische Unfallschwere 11 gewählt, um den Unfallschaden darzustellen. Vorteilhaft für das vorgestellte Verfahren ist eine Auswahl der technischen Unfallschwere 11 über $\Delta v$.

Auch bei beispielsweise einem frontalen Unfall sind mehrere Kennwerte möglich, um die Schwere anzugeben. Außerdem sind die einzelnen Fahrzeugdynamiken a(t), v(t) und s(t) konvertierbar beziehungsweise redundant, so dass es sinnvoll erscheint, die Betrachtungen zu reduzieren. Die Rückhaltesysteme sind hauptsächlich von der Verzögerung und der Geschwindigkeit abhängig. Die Verformung gibt keinen Aufschluss über das Auslaufverhalten und mögliche Mehrfachkollisionen.

Außerdem werden die Beschleunigungssignale bei Messung zum Beispiel mittels Event-Recorder oder bei FEM-Simulationen in den meisten Fällen verrauscht sein. Zusätzlich muss erwähnt werden, dass ein einzelner Wert eine grobe Näherung darstellt und in diesem Fall wichtige zeitliche Merkmale vernachlässigt, wie zum Beispiel die maximale oder mittlere Verzögerung

Andererseits hat der Wert $\Delta v$ eine lange Tradition bei Tiefenuntersuchungen und er weist eine starke Korrelation zu Verletzungswahrscheinlichkeiten auf. Die Wahrscheinlichkeit einer bestimmten MAIS-Stufe wird durch logistische Regression mit dem erfassten $\Delta v$-Wert in Beziehung gesetzt.

**Nomenklaturliste und Symbolliste**

Die nachfolgende Nomenklaturliste und Symbolliste ist aufgrund der hauptsächlich genutzten Sprache im Bereich des autonomen Fahrens und aus Konsistenzgründen zu entsprechenden genutzten Abkürzungen auf Englisch verfasst. Diese dient der Vollständigkeit halber insbesondere für die Interpretation und Auslegung der in der Beschreibung genutzten Formeln. Eventuell nicht ausgeschriebene Abkürzungen und/oder nicht erklärte Formelzeichen/-symbole können also der nachfolgenden Liste entnommen werden. Der Fachmann erhält aus den nachfolgenden Abkürzungen und Symbolnutzungen die entsprechenden Hinweise zur Berechnung der einzelnen Formeln beziehungsweise zu entsprechenden Zusammenhängen.

| | |
|---|---|
| GDP | Gross domestic product |
| SAE | Society of Automotive Engineers |
| EgoOwn | (ego) vehicle |
| TTC | Time-To-Collision |
| NCAP | New Car Assessment Programme |
| AIS | Abbreviated Injury Scale |
| MAIS | Maximal Abbreviated Injury Scale |
| GIDAS | German In-Depth Accident Study |
| GPU | Graphics Processing Unit |
| FRG | Federal Republic of Germany |
| ADAS | Advanced Driver Assistance Systems |
| IIHS | Institute for Highway Safety |
| ABS | Anti-lock Braking System |
| ESC | Electronic Stability Control |
| AACN | Advanced Automatic Crash Notification |
| eCall | Emergency call E911 |
| TPS | Third Party Services |
| MKB | Multi collision brake |
| ATMS | Advanced Traffic Management Systems |
| DMS | Dynamic Message Sign |
| HMI | Human Machine Interface |
| FE(M) | Finit Element (Method) |
| NASS-CDS | National Automotive Sampling System - Crashworthiness Data System |
| ICS | Inevitable collision state |
| TM | Tunnel Middle |
| TTX | Time to x |
| TTR | Time to react |
| TTB | Time to brake |
| TTS | Time to steer |
| CA | Collision avoidance |
| CM | Collision mitigation |

| ASIL | Automotive Safety Integrity Level |
| TTCCP | Time-to-critical-collision-probability |
| OEM | Original Equipment Manufacturer |
| MPC | Model Predictive Control |
| RK3 | Runge-Kutta integrator third order |
| AEB | Automatic Emergency Braking |
| VRU | Vulnerable Road User |
| MDP | Markov Decision Process |
| PDF | Probability density function |
| DOF | Degree of freedom |
| CDF | Cumulative density function |
| PCA | Principal Component Analysis |
| COG | Center of Gravity |
| SUV | Sports utility vehicle |
| MSE | Mean squared error |
| TP / FP | True / false positives |
| TN / FN | True / false negatives |
| FFNN | Feed forward neuronal network |
| RF | Random forest |
| CIM | Centric impact model |
| EIM | Eccentric impact model Kelvin modelTwo masses are connect by a parallel spring and damper |
| NOC | Number of Conflicts |
| CV | Constant velocity |
| CTR | Constant turn rate |
| LHS | Latin hypercube sampling |
| FS | Functional scenario |
| FES | Functional evaluation scenario |
| LS | Logical scenario |
| CS | Concrete scenario |
| GA | Genetic algorithm |
| GPSA | Generalized Pattern Search Algorithm |
| UTYPGIDAS | accident type |
| HIL | Hardware-in-the-loop |
| INS | Inertial Navigation System |
| GNSS | Global Navigation Satellite System |
| PCM | Pre-Crash-Matrix |
| V2I | Vehicle-to-infrastructure |
| LPTB | Last point to brake |
| LPTS | Last point to steer |
| SIL | Software in the loop |

(·)    Placeholder for a variable

n    arbitrary counter

N    Absolute number of a finite set

$a_{b,c}$    Notation means: variable $a$ with the properties b AND c (e.g. ego velocity in longitudinal direction: $v_{E,long}$)

$a_{b/c}$    Notation means: variable $a$ with the property $b$ AND variable a with the property $c$ (e.g., velocity $v$ for the ego vehicle E and velocity for the target vehicle K: $v_{E/K}$)

$a|b$    Event $a$ under the condition $b$ (e.g., accident severity under the condition of collision: |coll)

A    bold, capital letter indicates a matrix, or vector of random variables

$A, a$    bold symbol indicates a vector or matrix

$P(e)$    Probability of event

$e(·)(t)$    Time variant value (e.g., $a(t)$, $v(t)$, $s(t)$)

$(·)_{long}$    Value in longitudinal direction (e.g., $a_{long}$)

$(·)_{lat}$    Value in lateral direction (e.g., $a_{lat}$)

$p_Z(z)$    Probability density function to the random variable

Z    sample

$(\cdot)_E, (\cdot)_K, (\cdot)_{EK}$     The bidirectional relation between ego vehicle E and one target object K is emphasised by the identifiers E / K / EK

$Z \sim \mathcal{N}(\mu, \sigma)$     The random variable Z is normal distributed with the expected value $\mu$ and standard derivation

$Z \sim \mathcal{N}(\mu, \Sigma)$     The random vector Z is normal distributed with the expected value vector $\mu$ and covariance matrix $\Sigma$

$z: \Omega \to \mathbb{R}$     The random variable $z$ maps the sample space $\Omega$ to a scalar value of a real number $\mathbb{R}$ Real numbers

$E(\cdot)$     Expected value

$(\cdot)^*$     Optimal value

$(\cdot)_n, (\cdot)_t$     Normal and tangential direction

$(\cdot)_f, (\cdot)_r$     Front and rear axle of the non-linear single track model

$(\cdot)$ and $(\cdot)'$     Before and afterwards

$\Delta(\cdot)$     Relative values (e.g., relative pose such as $\Delta x, \Delta y,$ and $\Delta \varphi$)

$\hat{(\cdot)}, (\cdot)$     Estimated value $\hat{(\cdot)}$ in relation to the reference value $(\cdot)$

$f(\cdot)$     Function in general;

$t$     time

$t_0$     Time at the moment 0 (begin of a sequence);

$t_p, t_i, t_m$     Different time $t$ discretisation levels ($t_p$: between states s, $t_i$: reward generation, $t_m$: integration steps dynamic model)

$i$     Index of time step $t_i$ for the reward generation

$_{ti}(s, a, s')$     of the MDP

$F$     Force

$a$     Acceleration;

$a_{in}$     Input acceleration and deceleration due to the engine and brake, respectively, according to the motion planning

$v$     Velocity

$v_{rel}$     Relative velocity

$v_{ego}, v_E$     Velocity of ego vehicle

$v_{target}, v_K$     Velocity of target vehicle $s$ Displacement;

$E_{kin}$     Kinetic energy

$p$     Momentum;

$\Delta T$     Deformation energy

$s$     Displacement on a trajectory; State in the MDP $s \in \mathcal{S}$; empirical standard derivation

$\{\mathcal{S}, \mathcal{A}, \mathcal{T}, \mathcal{R}e, \gamma\}$     5-tupel which defines the Markov Decision Process (MDP) with the set of states S, the set of actions $\mathcal{A}$, the set of transitions $T$, set of rewards $Re$, and discount factor $\gamma$

$A_s$     Set of available actions $a$ in state s aaction

$s'$     Future state in the MDP $s' \in S$ with reference to state s

$T(s, a, s')$     Transition in the MDP between the state s and $s'$ according to the action $a$

$Re(s, a, s')$     Reward in the MDP between the state $s$ and $s'$ according to the action $a$

$f(s, a, s')$     Feature in the MDP which is derived between the state s and $s'$ according to the action $a$

$\theta$     Weight of the reward function

$\pi$     Policy (sample of $\Pi$)

$\pi^*$     Optimal policy

$\pi^S$     Selected policy

$\Pi$     Set of possible policies

$\Delta t_{E,dyn}$     Step size to integrate the dynamic model

$\tau_{E,dyn}$ ($\Delta t_{E,dyn} = t_{m+1} - t_m$)     $V(s)$ Value in the MDP of the state s

TH     Time horizon of the planning process

$\psi \in \Psi$     Accident severity as part of risk

$R$     (criticality feature)

$R,_f$     Risk (criticality feature) - in general terms and as feature in the motion planning (partly aggregated)

$\Delta v$     velocity change during crash / technical acccident severity

$P(C)$     Collision probability

$\psi$ impact     Severity in the moment of impact

$R_{thr}$     Risk threshold for the graceful degradation

M     Environment model

$\eta$     Accident severity prediction function

$\omega$     Label for the instantaneous vehicle object (collision) configuration ($\omega := z_{EK}$); Yaw rate

$\omega_{coll}$, $\omega_{\overline{coll}}$     Instantaneous vehicle object configuration which is in collision or not in collision

$\omega_{coll}^{Pmax}$     Most probable collision configuration

$\Omega$     Sample space; Random variable to the yaw rate

$\omega\Omega^{dyn}$     Sample space of dynamic elements

$\Omega^{stat}$     Sample space of static elements

$\Omega^{voc}$     Sample space of vehicle object constellations

$\tau$     Dynamic model (e.g., $\tau_{E,dyn}$ represents the ego vehicle dynamic with a non-linear single track model)

$x$     Position in $x$ direction

$y$     Position in y direction

$\varphi$     Orientation

$o_k \in \mathcal{O}$   $\mathcal{O}$   $h_k^j \in \mathcal{H}_k$     The sample target vehicles $o_k$ are summarised by the set The sample intentions $h_k^j$ of target vehicle $o_k$ are summarised by the set $\mathcal{H}_k$ of the target vehicle

EK     Bidirectional event between ego vehicle E and one target object

$o_{k=K}$.     It relates to the substate $z_{EK}$ of one time step $t_i$ of object $o_k$ with intention $h_j$ and thus is equal to $EK \triangleq EK_{i,k}^j$

C     Event collision

$z \in Z$     State vector as sample vector and random vector(e.g., $z_E \in Z_E$, $z_K \in Z_K$)

$x_c \in X_c$     Object classification as sample and random variable

$z_{EK} \in Z_{EK}$     State vector of bidirectional substate between ego E and one target object K as sample vector and random vector with

$EK \triangleq EK_{i,k}^j$   $z_{dyn} \in Z_{dyn}$     State vector with dynamic, time variant elements of z as sample vector and random vector

$z_{stat} \in Z_{stat}$     State vector with static, time invariant elements of z as sample vector and random vector

$\underline{g} \in G$     State vector with geometric elements of z as sample vector and random vector

$\tilde{g} \in \tilde{G}$     Reduced state vector with geometric elements of z as sample vector and random vector

$p \in P$     Reduced state vector excluding geometric elements of z as sample vector and random vector

$z_{input} \in Z_{input}$     Reduced state vector with directly and indirectly measureable elements of z as sample vector and random vector

$z_{train} \in Z_{train}$     Reduced state vector with non-measureable elements of z as sample vector and random vector

$f_{crit}(s,a,s')$     Feature for the criticality estimation

$f_{comfort}(s,a,s')$     Feature for the comfort estimation

$f_{progress}(s,a,s')$     Feature for the progress estimation

$\Psi_{Pmax}$     Accident severity at the most probable collision configuration $\omega_{coll}^{Pmax}$

$D, D'$ etc.     Minkowski Difference. The apostrophe indicates a transformed Minkowski Difference.

$\delta$     Confidence interval for the angle probability; Steering angle

$\Lambda$     Matrix of eigenvalues

$V$     Matrix of eigenvectors

$\alpha$     Rotation angle of eigenvectors; Angle to COG line; Accuracy function $\alpha(\cdot)$; Slip angle

$\Sigma$     Covariance matrix

$l$     Length of a vehicle

w     Width of a vehicle

e     Restitution coefficient

M     Mass matrix of multi-body system mMass; Index of time step $t_m$ for the integration of a dynamic model

C     Damper matrix of multi-body system cDamper coefficient of a damper

K     Stiffness matrix of multi-body system

k     Stiffness of a spring, Index of objects $o_k$

$\xi$     Additional static feature

$J$    Moment of inertia;

$f_{model}$    Established models (e.g., dynamic model $\tau$) to map direct measreable parameters

$\varrho$    Correlation coefficient

$q$    Weighting factor between self and target protection

$S$    Momentum (impact drive)

$B$    Impact point

$\mu$    Friction; Expected value

r    Distance vector

$r_F$    Distance vector to force insertion

$e$    Error (defined as difference between the estimated and reference value such as $e = \hat{(\cdot)} - (\cdot)$; Restitution coefficient

$a$    Rotation angle of eigenvectors; angle to COG line; accuracy function $\alpha(\cdot)$

$\phi(\cdot)$    Relevance function

F1-score    harmonic mean (e.g., between precision and recall)

$g(t)$    Execution time value

T-score    harmonic mean (e.g., between F1-score and $g(t)$)

$\sigma$    Standard derivation; Mechanical load

$\epsilon$    Deformation / displacement

$z_{cm}$    State to the crash motion model $\tau_{cm}$

$\lambda$    Eigenvalue; Constraint; Progress on trajectory (e.g., $\lambda_{ego}$)

$k_{air}$    Constant of the flow resistance

$k_e$    Engine proportion relating to front and rear axle

$d$    Distance (e.g. distance between current position of the vehicle and the centerline

$d_{lat}$,    distance to potential collision objects at the moment of appearance $d_{appear}$

$f_{update}$    Update frequency of the planning process

**Bezugszeichenliste**

1    Kraftfahrzeug
2    Assistenzsystem
3    Umgebungserfassungseinrichtung
4    elektronische Recheneinrichtung
5    Umgebung
6    Objekt
7    Unsicherheit
8    Trajektorie
8a    Ausweichmanöver
8b    Kollisionsmanöver
8c    Mitigationsmanöver
9    Kollisionswahrscheinlichkeit
10    wahrscheinlichste Trefferkonstellation
11    Unfallschwere
12    Gewicht
13    vergangene Position
14    Längsbeschleunigungseinrichtung
15    Querbeschleunigungseinrichtung
16    weiteres Objekt
S1    erster Schritt
S2    zweiter Schritt
S3    dritter Schritt
S4    vierter Schritt
S5    fünfter Schritt
S6    sechster Schritt
R    Risikowert

**Patentansprüche**

1. Verfahren zum Bestimmen einer Trajektorie (8) eines zumindest teilweise assistiert betriebenen Kraftfahrzeugs (1) mittels eines Assistenzsystems (2) des Kraftfahrzeugs (1), bei welchem mittels einer Umgebungserfassungseinrichtung (3) des Assistenzsystems (2) zumindest ein Objekt (6) in einer Umgebung (5) des Kraftfahrzeugs (1) erfasst wird und zumindest eine Unsicherheit (7) zum Objekt (6) mittels einer elektronischen Recheneinrichtung (4) des Assistenzsystems (2) bestimmt wird, wobei in Abhängigkeit von der erfassten Umgebung (5) und dem erfassten Objekt (6) eine zukünftige Umgebung (5) mit dem Objekt (6) mittels der elektronischen Recheneinrichtung (4) prädiziert wird, wobei ein Risikowert (R) für eine geplante Trajektorie (8a, 8b, 8c) auf Basis einer mittels der elektronischen Recheneinrichtung (4) bestimmten Kollisionswahrscheinlichkeit (9) und einer bestimmten wahrscheinlichsten Trefferkonstellation (10) und einer bestimmten Unfallschwere (11) für die wahrscheinlichste Trefferkonstellation (10) bestimmt wird, wobei im Risikowert (R) die Kollisionswahrscheinlichkeit (9) und die Unfallschwere (10) gewichtet werden, und wobei in Abhängigkeit von dem bestimmten Risikowert (R) die Trajektorie (8) bestimmt wird.

2. Verfahren nach Anspruch 1,
   **dadurch gekennzeichnet, dass**
   als Trajektorie (8) ein Ausweichmanöver (8a) gegenüber dem vom Objekt (6) oder ein Mitigationsmanöver (8c) zum Objekt (6) bestimmt wird.

3. Verfahren nach Anspruch 1 oder 2,
   **dadurch gekennzeichnet, dass**
   bei der Trajektorie (8) zumindest teilweise assistiert in eine Längsbeschleunigungseinrichtung (14) und/oder in eine Querbeschleunigungseinrichtung (15) des Kraftfahrzeugs (1) eingegriffen wird.

4. Verfahren nach einem der vorhergehenden Ansprüche,
   **dadurch gekennzeichnet, dass**
   als Unsicherheit (7) eine Positionsunsicherheit des Objekts (6) und/oder eine Positionsunsicherheit des Kraftfahrzeugs (1) und/oder eine Posenunsicherheit des Objekts (6) und/oder eine Posenunsicherheit des Kraftfahrzeugs (1) und/oder eine Parameterunsicherheit des Objekts (6) und/oder eine Parameterunsicherheit des Kraftfahrzeugs (1) bestimmt wird.

5. Verfahren nach einem der vorhergehenden Ansprüche,
   **dadurch gekennzeichnet, dass**
   auf einer instantanen Ebene für die zukünftige Umgebung (5) die Bestimmung des Risikowerts (R) durchgeführt wird.

6. Verfahren nach einem der vorhergehenden Ansprüche,
   **dadurch gekennzeichnet, dass**
   die Bestimmung der Trajektorie (8), insbesondere die Bestimmung des Risikowerts (R), in Echtzeit durchgeführt wird.

7. Verfahren nach einem der vorhergehenden Ansprüche,
   **dadurch gekennzeichnet, dass**
   die Bestimmung der wahrscheinlichsten Trefferkonstellation (10) auf Basis einer Minkowski Differenz und einer linearen Transformation durchgeführt wird.

8. Verfahren nach einem der vorhergehenden Ansprüche,
   **dadurch gekennzeichnet, dass**
   eine Verteilung der Unfallschwere (11) bei der Bestimmung des Risikowerts (R) berücksichtigt wird.

9. Computerprogrammprodukt mit Programmcodemitteln, welche eine elektronische Recheneinrichtung (4) dazu veranlassen, wenn die Programmcodemittel von dieser abarbeitet werden, ein Verfahren nach einem der Ansprüche 1 bis 8 durchzuführen.

10. Assistenzsystem (2) für ein zumindest teilweise assistiert betriebenes Kraftfahrzeug (1) zum Bestimmen einer Trajektorie (8), mit zumindest einer Umgebungserfassungseinrichtung (3) und mit einer elektronischen Recheneinrichtung (4), wobei das Assistenzsystem (2) zum Durchführen eines Verfahrens nach einem der Ansprüche 1 bis 8 ausgebildet ist.

5

**Fig. 1**

**Fig. 2**

Fig. 3

EP 4 067 186 A1

Fig. 4

Europäisches
Patentamt

European
Patent Office

Office européen
des brevets

## EUROPÄISCHER RECHERCHENBERICHT

**Nummer der Anmeldung**

EP 22 16 5282

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Hruschka Clemens Markus: "Risk assessment for integral safety in operational motion planning of automated driving", , 8. Januar 2021 (2021-01-08), XP055947831, Gefunden im Internet: URL:https://tubaf.qucosa.de/api/qucosa:767 55/attachment/ATT-0/ [gefunden am 2022-08-01] * Seiten 6-7 * * Seiten 42-43 * * Seiten 57-63 * * das ganze Dokument * ----- | 1-10 | INV. B60W30/085 B60W30/09 B60W30/095 B60W60/00 G05D1/02 |
| A | THEMANN P ET AL: "Impact of positioning uncertainty of vulnerable road users on risk minimization in collision avoidance systems", 2015 IEEE INTELLIGENT VEHICLES SYMPOSIUM (IV), IEEE, 28. Juni 2015 (2015-06-28), Seiten 1201-1206, XP033209876, DOI: 10.1109/IVS.2015.7225846 [gefunden am 2015-08-26] * das ganze Dokument * ----- | 1-10 | |

| RECHERCHIERTE SACHGEBIETE (IPC) |
|---|
| B60W G05D |

Der vorliegende Recherchenbericht wurde für alle Patentansprüche erstellt

| Recherchenort | Abschlußdatum der Recherche | Prüfer |
|---|---|---|
| München | 11. August 2022 | Stolle, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..............................................................................

& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016218080 B3

**In der Beschreibung aufgeführte Nicht-Patentliteratur**

- **J. HARDY ; M. CAMPBELL.** Contingency Planning over Probabilistic Obstacle Predictions for Autonomous Road Vehicles. *IEEE Transactions on Robotics,* 2013